# EUROPÄISCHE PATENTSCHRIFT

(11) **EP 1 095 825 B1**
(45) Veröffentlichungstag und Bekanntmachung des Hinweises auf die Patenterteilung: **17.12.2003**
(21) Anmeldenummer: 00123314.7
(22) Anmeldetag: 26.10.2000
(51) Int. Cl.: B60R 21/20

(54) **Verfahren zur Herstellung einer Abdeckkappe für ein Gassack-Rückhaltemodul und Abdeckkappe**
Method for producing a cover for an airbag module and a cover
Procédé de fabrication d'un couvercle pour un module de coussin gonflable et un couvercle

(30) Priorität: 29.10.1999 DE 19952497
(43) Veröffentlichungstag der Anmeldung: 02.05.2001
(73) Patentinhaber: TRW Automotive Safety Systems GmbH, 63743 Aschaffenburg (DE)
(72) Erfinder: Derrick, John-Oliver, 97265 Hettstadt (DE); Bieber, Udo, 63843 Niedernberg (DE); Neupert, Ralph, 63839 Kleinwallstadt (DE)
(74) Vertreter: Kitzhofer, Thomas, Dipl.-Ing.

(56) Entgegenhaltungen:
- EP-A- 0 639 481
- WO-A-97/17233
- US-A- 5 372 379

## Beschreibung

Die Erfindung betrifft ein Verfahren zum Herstellen einer Abdeckkappe für ein Gassack-Rückhaltemodul nach dem Oberbegriff des Anspruchs 1 und eine Abdeckkappe, vorzugsweise aus Kunststoff, für ein Gassack-Rückhaltemodul, die durch das erfindwngsgemäße Verfahren hergestellt wird.

Die Aufreißlinien bei Abdeckkappen, die üblicherweise aus Kunststoff sind, sollen es ermöglichen, daß die Abdeckkappe über einen großen Temperaturbereich stets definiert aufreißen kann.

Dazu sind Aufreißlinien oder sogenannte Initialstellen, von denen der Aufreißvorgang ausgeht, in der Kappe durch Vertiefungen im Kunststoff gebildet. Gerade bei sehr tiefen Temperaturen ist es schwer zu erreichen, daß die Kappe innerhalb eines engen Bereichs der Kraft, die auf sie aufgebracht wird, aufreißt. Darüber hinaus zeichnen sich die Vertiefungen in der Abdeckkappe vorderseitig ab, was nicht erwünscht ist. Durch die Vertiefungen wird zudem die Elastizität des von der Aufreißlinie umschlossenen Bereichs herabgesetzt, was ebenfalls zu vermeiden ist.

Eine andere Möglichkeit zur Erzeugung einer Sollbruchstelle ist in der gattungsgemäßen WO 97/17233 beschrieben. Hier wird die durch Bestrahlung mit UV-Licht in einem Kunststoff hervorgerufene Versprödung ausgenutzt, um geschwächte Aufreißlinien in einer Abdeckkappe zu erzeugen. Die Ausbildung dieser Linien kann durch chemische Inhibitoren oder Promotoren unterstützt werden.

In einer lederüberzogenen Abdeckkappe kann eine von der Außenseite unsichtbare Aufreißlinie dadurch erzeugt werden, daß die entsprechende Zone auf der Rückseite des Lederüberzugs mit einer aushärtenden Flüssigkeit, z.B. einem Lack behandelt wird. Hierdurch wird das Leder, das von Natur aus aufgrund seiner Geschmeidigkeit nicht zur Bruchbildung neigt, entlang der Aufreißlinie spröde genug, um bei der Aktivierung des Gassacks aufzubrechen. Ein derartiges Herstellungsverfahren ist in der EP 0 639 481 A1 vorgestellt.

Die Erfindung schafft ein Verfahren, das die obigen Nachteile reduziert, und durch das die zum Aufreißen erforderliche Kraft über den gesamten Temperaturbereich (-40^{o}C bis +80^{o}C) in engeren Grenzen vorbestimmbar, ist.

Dies wird durch ein Verfahren nach Anspruch 1 gelöst.

Das erfindungsgemäße Verfahren sieht vor, die Abdeckkappe wenigstens bereichsweise durch chemische und/oder physikalische Behandlung so zu schwächen, daß dieser Bereich leichter aufreißen kann, indem der Werkstoff selbst, also nicht die Geometrie der Abdeckkappe, verändert wird und durch die Veränderung eine geringere Festigkeit erhält. Vertiefungen können damit gegebenenfalls entfallen oder eine geringere Tiefe als bisherige haben.

Üblicherweise ist die Kappe aus Kunststoff, die versprödet wird.

Weitere Merkmale und Vorteile der Erfindung ergeben sich aus der nachfolgenden Beschreibung und aus den nachfolgenden Zeichnungen, auf die Bezug genommen wird.
- Fig. 1 zeigt eine Draufsicht auf eine Ausführungsform der erfindungsgemäß hergestellten Abdeckkappe; und
- Fig. 2 zeigt einen verkleinerten Schnitt längs der Linie II-II durch die erfindungsgemäße Abdeckkappe nach Fig. 1.

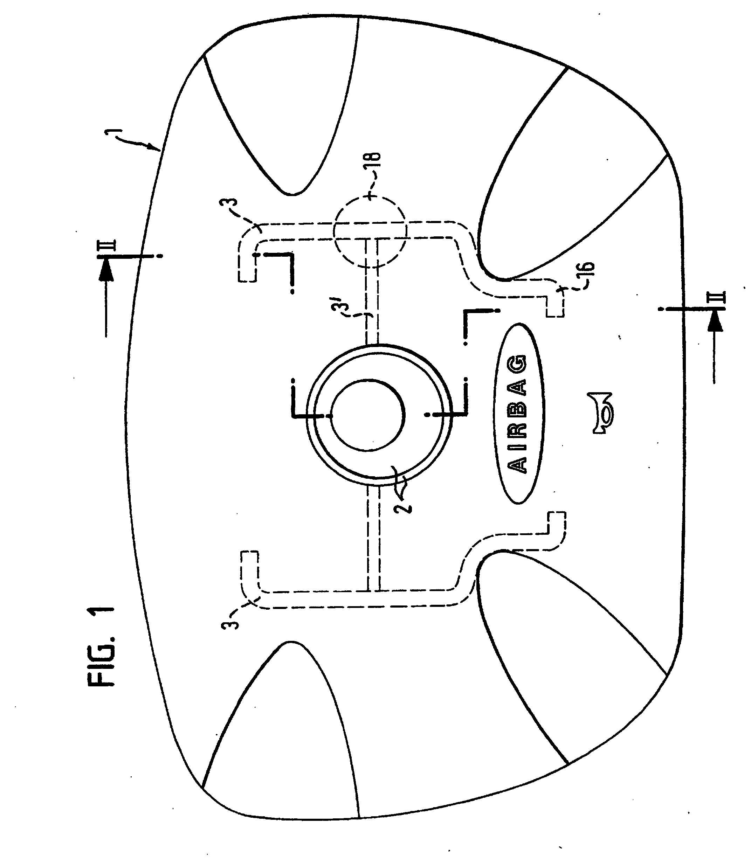

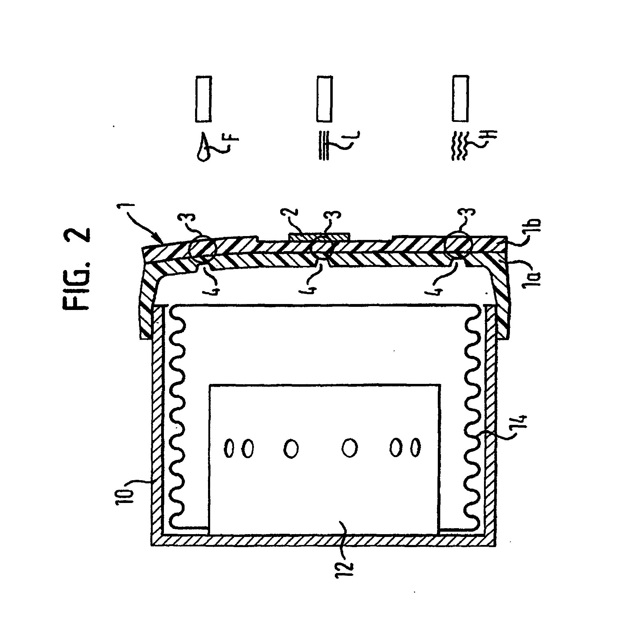

Fig. 1 zeigt eine Abdeckkappe 1 für ein Fahrer-Gassack-Rückhaltemodul, welches am Lenkrad angebracht ist und einen Aufnahmebehälter 10, einen Gasgenerator 12, einen Gassack 14 und die Abdeckkappe 1 aufweist, welche den Aufnahmebehälter 10 schließt. Unter der Abdeckkappe ist der Gassack 14 vorgesehen, der im Rückhaltefall die Abdeckkappe längs einer mit unterbrochenen Linien dargestellten Aufreißlinie 3, 3' zerstört. Mit 2 ist ein außenseitig angebrachtes Emblem bezeichnet. Die Abdeckkappe besteht aus zwei Komponenten 1a und 1b (vgl. Fig. 2). Die Trägerkomponente 1a ist im Querschnitt U-förmig, und die Komponente 1b deckt den ganzen außenseitigen Abdeckbereich, der in Fig. 1 zu sehen ist, ab. Beide Komponenten sind aus Kunststoff.

Die Aufreißlinie 3, 3' wird durch eine physikalische und/oder chemische Behandlung der Komponente 1a und/oder der Komponente 1b erzeugt. Beispielsweise wird auf den Kunststoff längs der Aufreißlinie 3, 3' eine Flüssigkeit F aufgebracht, die ihn abschnittsweise versprödet. Auch die Behandlung mit Licht L und/oder Wärme H kann zu einer Versprödung führen. Im versprödeten Bereich hat der Kunststoff eine geringere Festigkeit als im unbehandelten, d.h. nicht versprödeten Zustand.

Wenn die Versprödung allein nicht genügt, um eine geringe Aufreißkraft sicherzustellen, kann auch noch, wie in Fig. 2 gezeigt, eine geringe Vertiefung 4, die nicht unbedingt längs der gesamten Aufreißlinie 3 verlaufen muß, vorgesehen sein. Im übrigen ist klarzustellen, daß die Versprödung selbst am Werkstoff nicht zu sehen ist, weshalb auch in Fig. 2 der versprödete Bereich nur umrahmt dargestellt ist, rein optisch aber nicht von dem Bereich zu unterscheiden ist, der nicht behandelt wurde.

Außenseitig ist die Abdeckkappe aber ohne eine Vertiefung ausgebildet, auch nicht im Bereich der Aufreißlinie 3.

Die Aufreißlinie 3 muß auch nicht über die gesamte Länge durch physikalische und/oder chemische Behandlung versprödet sein, es ist auch eine abschnittsweise Versprödung denkbar. Darüber hinaus kann zum Beispiel die zentrale Aufreißlinie 3', die zuerst reißt, stärker behandelt sein als die übrige Aufreißlinie 3, so daß ihre Festigkeit deutlich unter der Festigkeit der Abdeckkappe im Bereich der Aufreißlinie 3 liegt.

Denkbar ist auch, die gesamte Vorderseite oder Außenseite der Abdeckkappe oder die gesamte Abdeckkappe zu verspröden und rückseitig vorzugsweise mit den Vertiefungen 4 zu versehen, damit das Öffnen der Kappe leichter erfolgen kann.

Ferner ist es möglich, beispielsweise die Aufreißlinie 3 nicht zu verspröden, nur die zentrale Aufreißlinie 3'.

Auch eine Versprödung lediglich im Bereich einer Kante 16 (Aufreißkante) oder eines großflächigen Bereichs, z.B. im Bereich 18, zur Bildung einer Sollbruchstelle ist möglich.

## Patentansprüche

1. Verfahren zur Herstellung einer Abdeckkappe (1) für ein Gassack-Rückhaltemodul, die zum Entfalten des Gassacks (14) aufreißt,
wobei die Abdeckkappe (1) physikalisch und/oder chemisch wenigstens bereichsweise so behandelt wird, daß ihr Werkstoff im behandelten Bereich (3, 3') eine geringere Festigkeit als im unbehandelten Zustand hat, **dadurch gekennzeichnet, daß** die Abdeckkappe (1) abschnittsweise unterschiedlich stark behandelt wird, so daß die Festigkeit des Werkstoffs der Abdeckkappe (1) in den behandelten Abschnitten (3, 3') unterschiedlich stark reduziert wird.

2. Verfahren nach Anspruch 1, **dadurch gekennzeichnet, daß** die Abdeckkappe (1) aus Kunststoff ist.

3. Verfahren nach Anspruch 2, **dadurch gekennzeichnet, daß** der Kunststoff wenigstens bereichsweise versprödet wird.

4. Verfahren nach einem der vorhergehenden Ansprüche, **dadurch gekennzeichnet, daß** der Werkstoff durch ein Fluid chemisch oder mittels Licht oder Wärme beaufschlagt wird und seine ursprüngliche Festigkeit verliert.

5. Verfahren nach einem der vorhergehenden Ansprüche, **dadurch gekennzeichnet, daß** die Abdeckkappe (1) an einer Sollbruchstelle (4) physikalisch und/oder chemisch behandelt wird.

6. Verfahren nach einem der vorhergehenden Ansprüche, **dadurch gekennzeichnet, daß** die Abdeckkappe längs einer vorbestimmten Aufreißlinie (3, 3') behandelt wird.

7. Verfahren nach Anspruch 5 oder 6, **dadurch gekennzeichnet, daß** die Sollbruchstelle (4) oder die Aufreißlinie zusätzlich zur chemischen und/oder physikalischen Behandlung im behandelten Bereich eine verringerte Dicke aufweist.

8. Verfahren nach einem der vorhergehenden Ansprüche, **dadurch gekennzeichnet, daß** die Abdeckkappe (1) einen vorderen Abdeckbereich (1b) hat, der vollständig chemisch und/oder physikalisch behandelt wird.

9. Abdeckkappe aus Kunststoff für ein Gassack-Rückhaltemodul, wobei die Abdeckkappe (1) durch ein Verfahren nach einem der vorhergehenden Ansprüche hergestellt ist.

10. Abdeckkappe nach Anspruch 9, **dadurch gekennzeichnet, daß** die Abdeckkappe (1) außenseitig im Bereich des vorbestimmten Aufreißbereichs (3, 3') keine Vertiefung aufweist.

## Claims

1. A method of manufacturing a cover cap (1) for a gas bag restraint module, which cover cap tears open for deployment of the gas bag (14),
the cover cap (1) being treated at least region-wise physically and/or chemically such that its material in the treated region (3, 3') has a lower strength than in the untreated condition, **characterized in that** the cover cap (1) is treated section-wise with different intensity, so that the strength of the material of the cover cap (1) in the treated sections (3, 3') is reduced by different amounts.

2. The method according to Claim 1, **characterized in that** the cover cap (1) is made of plastic.

3. The method according to Claim 2, **characterized in that** the plastic is caused to embrittle at least region-wise.

4. The method according to any of the preceding Claims, **characterized in that** the material is treated chemically by a fluid or by means of light or heat and loses its original strength.

5. The method according to any of the preceding Claims, **characterized in that** the cover cap (1) is treated physically and/or chemically at a predetermined breaking point (4).

6. The method according to any of the preceding Claims, **characterized in that** the cover cap is treated along a predetermined tear line (3, 3').

7. The method according to Claim 5 or 6, **characterized in that** in addition to the chemical and/or physical treatment the predetermined breaking point (4) or the tear line has a reduced thickness in the treated region.

8. The method according to any of the preceding Claims, **characterized in that** the cover cap (1) has a front cover region (1b) which is treated completely chemically and/or physically.

9. A cover cap made of plastic for a gas bag restraint module, the cover cap (1) being manufactured by a method according to any of the preceding Claims.

10. The cover cap according to Claim 9, **characterized in that** the cover cap (1) has no depression on the outside in the region of the predetermined tear region (3, 3').

## Revendications

1. Procédé de fabrication d'un couvercle (1) pour un module de retenue à coussin à gaz, lequel se déchire pour le déploiement du coussin à gaz (14),
le couvercle (1) étant traité physiquement et/ou chimiquement au moins par zones de telle sorte que dans la zone traitée (3, 3'), son matériau présente une solidité plus faible qu'à l'état non traité, **caractérisé en ce que** le couvercle (1) est traité par zones avec une intensité différente de sorte que la solidité du matériau du couvercle (1) est réduite avec une intensité différente dans les zones (3, 3') traitées.

2. Procédé selon la revendication 1, **caractérisé en ce que** le couvercle (1) est en matière plastique.

3. Procédé selon la revendication 2, **caractérisé en ce que** la matière plastique est fragilisée au moins par zones.

4. Procédé selon l'une des revendications précédentes, **caractérisé en ce que** le matériau est sollicité chimiquement par un fluide ou au moyen de lumière ou de chaleur et **en ce qu'**il perd sa solidité initiale.

5. Procédé selon l'une des revendications précédentes, **caractérisé en ce que** le couvercle (1) est traité physiquement et/ou chimiquement à un point destiné à la rupture (4).

6. Procédé selon l'une des revendications précédentes, **caractérisé en ce que** le couvercle est traité le long d'une ligne de déchirement (3, 3') prédéterminée.

7. Procédé selon la revendication 5 ou 6, **caractérisé en ce que** le point destiné à la rupture (4) ou la ligne de déchirement présente une épaisseur réduite dans la zone traitée, additionnellement au traitement chimique et/ou physique.

8. Procédé selon l'une des revendications précédentes, **caractérisé en ce que** le couvercle (1) a une zone de couvercle antérieure (1b) qui est entièrement traitée chimiquement et/ou physiquement.

9. Couvercle en matière plastique pour un module de retenue à coussin à gaz, le couvercle (1) étant fabriqué par un procédé selon l'une des revendications précédentes.

10. Couvercle selon la revendication 9, **caractérisé en ce que** le couvercle (1) ne présente sur la face extérieure pas de creux dans la région de la zone de déchirement (3, 3') prédéterminée.
